(19)

**Europäisches Patentamt**

**European Patent Office**

**Office européen des brevets**

(11) **EP 4 557 179 A1**

(12) **EUROPEAN PATENT APPLICATION**

(43) Date of publication:
21.05.2025 Bulletin 2025/21

(51) International Patent Classification (IPC):
**G06N 5/045** (2023.01) **G06N 20/00** (2019.01)

(21) Application number: 23209726.1

(52) Cooperative Patent Classification (CPC):
**G06N 5/045; G06N 20/00**

(22) Date of filing: **14.11.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **DECKER, Thomas**
**85716 Unterschleißheim (DE)**
• **BUSCH, Julian**
**Newtown, 18940 (US)**
• **LEBACHER, Michael**
**84513 Töging am Inn (DE)**

(74) Representative: **Siemens Patent Attorneys**
**Postfach 22 16 34**
**80506 München (DE)**

(54) **FRAMEWORK FOR HUMAN-COMPREHENSIBLE EXPLANATION OF DETECTED ANOMALIES**

(57) The invention relates to a method and a device for determining reasons for detection of an anomalous system state. To this end, a normalized system state is determined as being the closest state to the anomalous system state that is determined not to be an anomalous system state.

FIG 1

EP 4 557 179 A1

**Description**

The invention relates to an anomaly determination explanation method for determining an explanation vector for explaining the determination that a state vector comprising n components represents an anomalous state as well as an anomaly determination explanation device.

Sensors are omnipresent in all kinds of machinery and equipment and, therefore, highly relevant for many different business fields. One especially important application field of sensors is monitoring the functionality of machinery and devices such as die casting machines, operating devices, measurements of PCB boards etc. To do so, sensors are installed on these machines and devices to measure various physical conditions such as current, temperature, pressure, position which enables monitoring of the state of the system.

If the machinery is damaged or malfunctioning, the sensor values typically show suspicious patterns and anomalies in the measured data. Machine learning algorithms may be trained to detect these anomalies.

Thus, a variety of anomaly detection devices and methods are based on machine learning algorithms. Data obtained from sensors often comprises complex time series data, e.g., expressed as complex data structures. Analysis methods for such complex time series are often sufficiently complex to no longer be understandable by humans, effectively forming a black box. This leads to a variety of inconveniences: Humans often cannot understand how the underlying model behaves and thus cannot reason about its properties and/or behavior. This leads to obstacles for developers to build better and more robust models. It also leads to problems with the detection of root-causes of anomalies and consequently to a lack of trust and acceptance from users.

Explanation of and reasoning about detected anomalies and the underlying anomaly detection is further complicated when only normal state data is known and anomaly state data is not available. Furthermore, anomaly detection is undertaken to, among other goals, derive actions to counter anomalous states. However, many anomaly detection results have no intrinsic interpretation from which such actions could be derived.

Given the above, there is a need for an improved method for deriving explanations of what components of input data were relevant for detection of any particular anomaly.

This problem is solved by a method according to Claim 1 and a device according to Claim 5. Advantageous embodiments are the subject of the dependent claims.

To solve the problem, an computer-implemented anomaly determination explanation method for determining an explanation vector for explaining the determination that an input vector representing a state represents an anomalous state, includes performing the steps of: determining an anomaly measure from the input vector by means of a state evaluation model; determining from the anomaly measure whether the input vector represents an anomalous state or a normal state; estimating a normalized input vector from the input vector, wherein the normalized input vector is a vector closest to the input vector to not be determined as anomalous according to its calculated anomaly measure; determining the explanation vector from the normalized input vector, the input vector and the state evaluation model such that the value of each component of the explanation vector corresponds to a measure of a contribution of one or more associated components of the input vector to the determination that the state vector represents an anomalous state.

This method is able to cope with complicated data structures such as high dimensional datasets, time series data, including their dynamics, and interdependencies which are presented as input vectors. Still, it is computationally efficient, even for high-dimensional data.

Given that the resulting explanation vector contains information about which components of the state vector contribute to the decision whether a state vector represents an anomalous or a normal state, it is transparent and interpretable in the sense that we understand which features trigger a given anomaly.

Also, it does not need to have information about actual anomalies at hand. Rather, that information is included, e.g., in the anomaly measure. Accordingly, it is trustworthy in the sense that the explanations are unbiased and should be well aligned with the actual reasons that lead to a predicted anomaly. Furthermore, its interpretability does not rely on additional data that needs to be accessed during deployment.

In some embodiments, the step of calculating the explanation vector comprises the sub-steps: determining the anomaly measure of the input vector as a baseline measure, and for each component of the explanation vector, determining a partly normalized input vector by replacing the component of the state vector corresponding to the component of the explanation vector by the respective associated component of the normalized input vector; determining the component of the explanation vector by subtracting the anomaly measure of the partly normalized input vector from the baseline measure.

This method may be easily implemented using very low CPU and memory requirements.

In some embodiments, the step of calculating the explanation vector comprises a method for determining an explanation vector relative to a baseline, such as Shapley Values, Lime, DeepLift or Integrated Gradients, wherein the normalized input vector is chosen as the baseline.

Thus, the method may be integrated in more complex models as well.

In some embodiments, the state is at least partially obtained from sensor data.

One of the main applications of the invention is to determine which sensor values contributed to the decision that the state vector x represents an anomalous state.

The problem is further solved by an anomaly determination explanation device comprising an anomaly measure calculating device configured to calculate an anomaly measure from an input vector representing a state by means of a state evaluation model, an anomaly detection device, configured to receive the anomaly measure from the anomaly measure calculating device and to determine from the anomaly measure whether the input vector represents an anomalous state or a normal state, a state normalization device, configured to estimate a normalized input vector from the input vector, wherein the normalized input vector is a vector closest to the input vector to not be determined as anomalous according to its calculated anomaly measure, and an explanation vector calculating device configured to determine an explanation vector from the normalized input vector, the input vector and the state evaluation model such that the value of each component of each component of the explanation vector corresponds to a measure of a contribution of one or more associated components of the input vector to the determination that the input vector represents an anomalous state.

This device is able to cope with complicated data structures such as high dimensional datasets, time series data, including their dynamics, and interdependencies which are presented as input vectors. Still, it is computationally efficient, even for high-dimensional data.

Given that the resulting explanation vector contains information about which components of the state vector contribute to the decision whether a state vector represents an anomalous or a normal state, it is transparent and interpretable in the sense that we understand which features trigger a given anomaly.

Also, it does not need to have information about actual anomalies at hand. Rather, that information is included, e.g., in the anomaly measure. Accordingly, it is trustworthy in the sense that the explanations are unbiased and should be well aligned with the actual reasons that lead to a predicted anomaly. Furthermore, its interpretability does not rely on additional data that needs to be accessed during deployment.

In some embodiments, the explanation vector calculating device is configured such that the step of determining the explanation vector comprises the sub-steps:

determining the anomaly measure of the input vector as a baseline measure, and
for each component of the explanation vector:

determining a partly normalized input vector by replacing the one or more components of the state vector corresponding to the component of the explanation vector by the respective associated one or more components of the normalized input vector and
determining the component of the explanation vector by subtracting the anomaly measure of the partly normalized input vector from the baseline measure.

This method may be easily implemented using very low CPU and memory requirements.

In some embodiments, the explanation vector calculating device is configured such that the step of determining the explanation vector comprises a method for determining an explanation vector relative to a baseline, such as Shapley Values, Lime, DeepLift or Integrated Gradients, wherein the normalized input vector is chosen as the baseline.

Thus, the method may be integrated in more complex models as well.

In some embodiments, the input vector is a state vector at least partially obtained from sensor data.

In some embodiments, the state is at least partially obtained from sensor data.

One of the main applications of the invention is to determine which sensor values contributed to the decision that the state vector x represents an anomalous state.

The problem is also solved by a computer program product directly loadable into an internal memory of a digital computer, comprising software code portions for performing the steps of the above-mentioned methods when said product is run on said digital computer.

Zhis implements the advantages of each method as stated above.

Further features and variants of the invention will be apparent to the skilled person, in particular from the enclosed drawings which show an example embodiment of the invention. The figures show:

Fig. 1      a schematic representation of an anomaly determination explanation device according to an embodiment of the invention,

Fig. 2      an example distribution of sensor data comprising one anomalous state, and

Fig. 3      a flow diagram of an embodiment of a method according to the present invention.

Time-series data, in particular data from sensors that may describe a state of a device, may be represented as an input vector in the form of a state vector x, with components $x_1$, $x_2$, ..., $x_i$ of the state vector x each comprising sensor data, for example each from a different sensor.

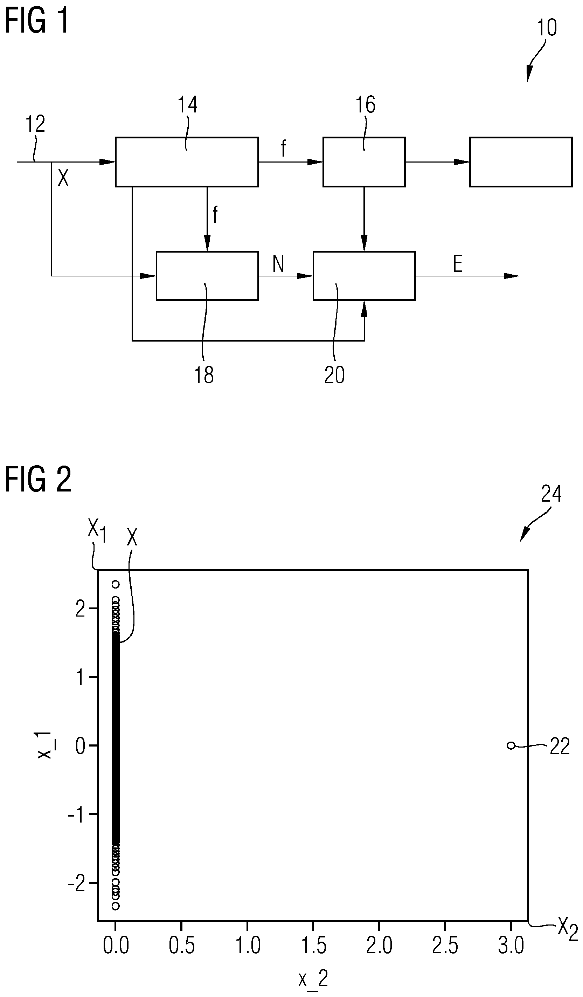

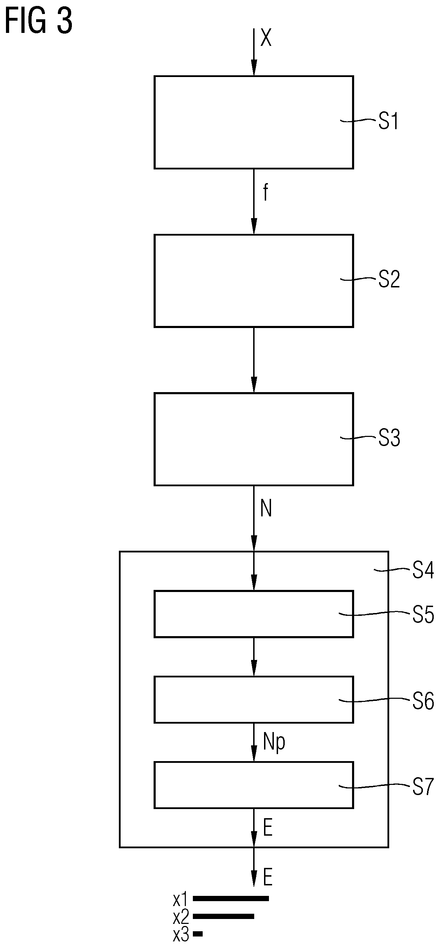

Anomalous device states may be detected by a sensor anomaly determination explanation device 10 as shown in Fig. 1 which is configured to carry out the steps shown in Fig. 3. The sensor anomaly determination explanation device 10 comprises, to this end, a multitude of inputs 12 for receiving sensor data and is configured to represent a state described by the sensor data as a state vector x comprising a number n of components. Often, the number of sensors equals the number n of components. However, this is not strictly necessary.

The sensor anomaly determination explanation device 10 further comprises an anomaly measure calculating device 14, which may also be called Anomaly Detection System, comprising a model of the sensors and the device, leading, e.g., to a function F(x) that provides an anomaly score or other anomaly measure f. The anomaly measure calculating device 14 is, in particular, configured to determine, for example by calculating, an anomaly measure f from the state vector x in a first step S1 by means of a state evaluation model which may have been derived from the sensors and device.

An anomaly detection device 16 is configured to receive the anomaly measure f from the anomaly measure calculating device and to determine, in a second step S2, from the anomaly measure f whether the state vector x represents an anomalous state or a normal state. If the anomaly measure f is a scalar, the simplest implementation of the anomaly detection device 16 may be configured to compare the anomaly measure f to a threshold value. Either values of the anomaly measure f above or below the threshold may indicate an anomalous state, depending on the definition of the state evaluation model.

A state normalization device 18 is configured to determine, in a third step S3, a normalized input vector N, comprising n components, from the state vector x, wherein the normalized input vector N is a vector closest to the state vector x to not be determined as anomalous according to its calculated anomaly measure f. The state normalization device 18 is thus configured to search for a normalized input vector N that is as close to the state vector x as possible while still being determined to represent a normal state by the anomaly detection device 16.

In some embodiments, the state normalization device 18 may be configured to carry out the determine step if the state vector x is determined to represent an anomalous state.

An explanation vector calculating device 20 is configured to determine, in a fourth step S4, an explanation vector E, comprising n components, from the normalized input vector N, the state vector x and the status evaluation model such that the value of each component of the explanation vector E corresponds to a measure of a contribution of that component's associated component of the state vector x to the determination that the state vector x represents an anomalous state. The explanation vector E comprises a component for one or more state vector x components that represents how relevant that one or more vector x components was in determining that the state is anomalous. The explanation vector E thus makes it possible, e.g., to look particularly at the sensor values that caused the anomalous state to determine, for example, the origin of a fault.

**Fig. 2** shows one example of a graph 24 in which a time series of two-dimensional state vectors x is displayed. In this case, a previously known method may be implemented as follows. To form two-dimensional state vectors x, we assume that we have two components or features $x_1$ and $x_2$. Most of the state vectors x follows a pattern with one outlier 22 $x_{outlier} = (x_1 = 0, x_2 = 3)$ describing an anomalous state. All other state vectors x only vary along the $x_1$ axis. We assume a very simple anomaly measure f being the Euclidian distance from the origin, i.e., $f(x) = \sqrt{x_1^2 + x_2^2}$ mimicking the idea of a density-based estimator since the origin is the center of all normal points. In this construct we also ensured that the outlier with $f(x_{outlier}) = \sqrt{0^2 + 3^2} = 3$ has the highest distance to the origin and hence also would be classified as an outlier.

The goal of any method for anomaly determination explanation would be to decompose the anomaly score such that the contributions to the anomaly measure f can be attributed to the two features $x_1$ and $x_2$. By construction we know that the anomaly score $f(x_{outlier}) = 3$ can fully be attributed to the feature $x_2$ since from the perspective of $x_1$ the point is as normal as it can be. Hence, the expected outcome of a good anomaly determination explanation method is that feature $x_2$ contributes 3 to the anomaly measure, while the feature $x_1$ contributes 0.

One basic known method relies on the idea of simulating removal of features. In this case, we assume that $x_1$ and $x_2$ are independent. Hence, for the point $x_{outlier}$ we may, for example, simulate the removal of feature $x_1$ as follows:

$$f_{-1} \approx \frac{1}{N} \sum_{i=1,\dots,N} f(x_{i,1}, x_{outlier,2})$$

And for feature $x_2$ we have

$$f_{-2} \approx \frac{1}{N} \sum_{i=1,...,N} f\left(x_{outlier,1}, x_{i,2}\right)$$

A simple measure for the feature attribution may then be

$$contribution_i = f\left(x_{outlier,1}, x_{outlier,2}\right) - f_{-i}$$

In a numerical study, we set **$N$ =1000** and received the following outcomes:

Effect of removing axis $x_1$: **$contribution_1 \approx$ -0.098**
And effect of removing axis $x_2$: **$contribution_2 \approx$ 2.996**

So indeed, this method estimated the effect of removing the central axis $x_2$ fairly well. The expected explanation vector component would be 3 and the estimated one is 2.996, which is fairly good. However, the explanation vector E has a component $x_1$ which actually has no effect at all but gets an estimated effect to reduce the anomaly measure by roughly 0.1. We also find that the effect of component 2 will always be underestimated (i.e., being smaller than 3) with convergence as $N$ tends to infinity, while the error of component 1 does not disappear with more datapoints.

The present invention proposes a more suitable notion of feature removal for the purpose of explaining anomaly decisions by rather considering feature normalization based on the normalization module 18 instead.

The anomaly determination explanation device 10 according to Fig. 1 analyzes the input vector x obtained from the input 12 and outputs an anomaly decision indicating the extent to which the input vector x appears anomalous. To understand which specific features of the input vector x contribute to the anomaly measure f, the state normalization device 18 derives or estimates from the anomaly measure calculating device 14 and/or the anomaly detection device 16 the closest point to x that has an anomaly measure f that is considered normal and determines, in step S3, that point as a normalized input vector N or N(x). Finally, an explanation vector calculating device 20 analyzes the anomaly measure calculating device 14 and/or the anomaly detection device 16 based on the normalized input vector N(x) in order to determine, in step S4, which features or components of state vector x (denoted by $x_1, x_2...$) are responsible for the anomaly detection device 16 to determine the state x as anomalous.

The state normalization device 18 allows a user to derive appropriate explanations where the simplified notion of feature removal is replaced by feature normalization based on using the normalized input vector N.

Generally, it will be a mathematically hard problem to find an exact normalized input vector N that actually represents the closest point to the input vector x that is considered to be normal by the anomaly detection device 16. Accordingly, the normalized input vector N will, for example, be estimated for most input vectors x. For this estimate, mathematical methods such as approximations may be used. This can for instance be realized by explicitly searching for a new state in the proximity of x that is considered normal by the anomaly detection device 16 via dedicated sampling or optimization procedures. If the anomaly detection device 16 is differentiable, e.g. a Neural Network, backpropagation can be used for this purpose. For other model types, gradient-free techniques such as particle swarm optimization are applicable. An alternative approach involves providing the state normalization device 18 with a finite set of predetermined state vectors, all of which have been a priori identified as normal. These predefined state vectors can directly be queried to determine the closest matching normal state.

Applied to the example outlined above with regard to Fig. 2, the state normalization device 18 would map the outlier state vector x=(0,3) to the closest normal point from the perspective of the normalized input vector N(x)=(0,0) and the corresponding explanation vector E can be derived without wrongly averaging out features but rather normalizing features by replacing them with the corresponding values of N(x). This results in E(x) = (0,3) as desired and correctly indicating that the value of $x_2$ is solely responsible for the observed outlier score.

To this end, the anomaly measure f would be determined in a step S5, as a baseline measure. Furthermore, to determine a component of the explanation vector E, in step S6, a partly normalized input vector Np is calculated for each of the components of the explanation vector E, in which one or more components of the input vector x are replaced with their respective one or more components of the normalized input vector N corresponding to the component of the explanation vector E.

In a further step S7, each of the components of the explanation vector E is determined by subtracting the anomaly measure f of its associated partly normalized input vector Np from the baseline measure.

In case of the example, this would imply to calculate in steps 5 and 6

$$f_{-1} = \sqrt{N(x_{outlier})_1^2 + x_{outlier,2}^2} = 3$$

and

$$f_{-2} = \sqrt{x_{outlier,1}^2 + N(x_{outlier})_2^2} = 0$$

with corresponding contribution measures calculated in step S7 as

$$contribution_1 = f(x_{outlier}) - f_{-1} = 3 - 3 = 0$$

and

$$contribution_2 = f(x_{outlier}) - f_{-2} = 3 - 0 = 3 \quad ,$$

which exactly match the expected explanation vector E(x)=(0,3) .

Note that this logic of normalizing features or components instead of removing them to explain which components were relevant for the anomaly determination explanation device 10 can also be combined with other computational ways how to derive explanations. Techniques that explicitly consider a baseline (like Shapley Values, Lime, DeepLift or Integrated Gradients) can be reformulated by setting the normalized input vector N(x) as the baseline value when explaining the anomaly decision for the state vector x. Therefore, the explanation vector calculating device 20 can also be implemented with any of such methods.

Also, the same logic is also applicable where the anomaly measure calculating device 10 peruses not a simple distance measure but rather a more sophisticated model like SOM, LOF, kNN, One Class Neural Networks or One Class SVMs to calculate the anomaly measure.

In various embodiments, the input vector x may be constructed to represent various kinds of state. For example, in some embodiments, the input vector x may be constructed from sensor data such as, for example, position, orientation, acceleration, light, electric field, magnetic field, humidity, pressure, temperature, optical, acoustic and/or other sensor data. The input vector x may, thus, represent a current state of, for example, a machine. Such an input vector x may, for example, be one-dimensional, comprising components $x_1$, $x_2$, ..., $x_i$. In some embodiments, the input vector x may comprise image or other two-dimensional data. The input vector x may, in such a case, comprise components $x_{1,1}$, $x_{1,2}$, ..., $x_{1,k}$, $x_{2,1}$, ..., $x_{i,k}$. Each of the components may, in turn, comprise a scalar, vector, matrix or tensor. Input vectors x of higher dimensions may also be expedient for other tasks.

The explanation vector E may also comprise various components. In some embodiments, the explanation vector E may comprise one component associated to one component of the input vector x. In some embodiments, each component of the explanation vector E may represent multiple components of the input vector x.

In some embodiments, the anomaly determination device may comprise a data receiving device comprising a multitude of inputs 12 for receiving data and configured to represent a state described by the data as the input vector x.

It should be understood that the anomaly determination explanation device 10 in general, and in particular any of the anomaly measure calculating device 14, the anomaly detection device 16, the state normalization device 18 and/or the vector calculating device 20 may be implemented using software modules for execution on a CPU of, for example, a general-purpose computer. To this end, the software modules may be stored in non-transitory computer-readable storage media and loaded into memory for execution by the CPU. The software components may be written in various programming languages and may include machine-readable instructions to direct the operation of the general-purpose computer.

While the invention has been described in detail by means of the embodiment, the invention is not limited to said embodiment. The skilled person will easily derive other variations without departing from the spirit of the invention or the scope of the invention as defined by the claims below.

Optional features of the invention are designated with "may". Accordingly, there are also further embodiments and/or embodiments of the invention which additionally or alternatively have one or more of the respective feature or features.

From the presently disclosed combinations of features, isolated features can also be picked out, if necessary, and used in combination with other features to delimit the subject-matter of the claims, while removing the structural and/or functional relationship that may exist between the features.

Independent of the grammatical term usage, individuals with male, female or other gender identities are included within the term.

**Claims**

1. An anomaly determination explanation method for determining an explanation vector (E) for explaining the determination that an input vector (x) representing a state represents an anomalous state, the method including performing the steps of:

   determining (S1) an anomaly measure (f) from the input vector (x) by means of a state evaluation model;
   determining (S2) from the anomaly measure (f) whether the input vector (x) represents an anomalous state or a normal state;
   estimating (S3) a normalized input vector (N) from the input vector (x), wherein the normalized input vector (N) is a vector estimated to be the closest to the input vector (x) to not be determined as anomalous according to its calculated anomaly measure (f);
   determining (S4) the explanation vector (E) from the normalized input vector (N), the input vector (x) and the state evaluation model such that the value of each component of the explanation vector (E) corresponds to a measure of a contribution of one or more associated components of the input vector (x) to the determination that the input vector (x) represents an anomalous state.

2. The anomaly determination explanation method of claim 1, whereby the step of determining (S4) the explanation vector (E) comprises the sub-steps:

   determining (S5) the anomaly measure (f) of the input vector (x) as a baseline measure, and
   for each component of the explanation vector (E):

      determining (S6) a partly normalized input vector (Np) by replacing the one or more components of the input vector (x) corresponding to the component of the explanation vector (E) by the respective associated one or more components of the normalized input vector (N) and
      determining (S7) the component of the explanation vector (E) by subtracting the anomaly measure (f) of the partly normalized input vector (Np) from the baseline measure.

3. The anomaly determination explanation method according to claim 1, **whereby** the step of determining (S4) the explanation vector (E) comprises a method for determining an explanation vector (E) relative to a baseline, such as Shapley Values, Lime, DeepLift or Integrated Gradients, wherein the normalized input vector (N) is chosen as the baseline.

4. The anomaly determination explanation method according to any of the preceding claims, **whereby** the input vector (x) is a state vector at least partially obtained from sensor data.

5. An anomaly determination explanation device (10) comprising,

   an anomaly measure calculating device (14) configured to determine an anomaly measure (f) from an input vector (x) representing a state by means of a state evaluation model,
   an anomaly detection device (16), configured to receive the anomaly measure (f) from the anomaly measure calculating device (14) and to determine from the anomaly measure (f) whether the state vector (x) represents an anomalous state or a normal state,
   a state normalization device (18), configured to estimate a normalized input vector (N) from the input vector (x), wherein the normalized input vector (N) is a vector closest to the input vector (x) to not be determined as anomalous according to its calculated anomaly measure (f), and
   an explanation vector calculating device (20) configured to determine an explanation vector (E) from the normalized input vector (N), the input vector (x) and the state evaluation model such that the value of each component of the explanation vector (E) corresponds to a measure of a contribution of one or more associated components of the input vector (x) to the determination that the input vector (x) represents an anomalous state.

6. The anomaly determination explanation device (10) of claim 5, **whereby** the explanation vector calculating device (20) is configured such that the step of determining the explanation vector (E) comprises the sub-steps:

determining the anomaly measure (f) of the input vector (x) as a baseline measure, and
for each component of the explanation vector (E):

determining a partly normalized input vector (Np) by replacing the one or more components of the state vector (x) corresponding to the component of the explanation vector (E) by the respective associated one or more components of the normalized input vector (N) and
determining the component of the explanation vector (E) by subtracting the anomaly measure (f) of the partly normalized input vector (Np) from the baseline measure.

7. The anomaly determination explanation device (10) of claim 5, **whereby** the explanation vector calculating device (20) is configured such that the step of determining the explanation vector (E) comprises a method for determining an explanation vector (E) relative to a baseline, such as Shapley Values, Lime, DeepLift or Integrated Gradients, wherein the normalized input vector (N) is chosen as the baseline.

8. The anomaly determination explanation method according to any of the claims 5 to 7, **whereby** the input vector (x) is a state vector at least partially obtained from sensor data.

9. A computer program product directly loadable into an internal memory of a digital computer, comprising software code portions for performing the steps of claims 1-4 when said product is run on said digital computer.

## FIG 1

## FIG 2

# FIG 3

Europäisches
Patentamt

European
Patent Office

Office européen
des brevets

# EUROPEAN SEARCH REPORT

**Application Number**

EP 23 20 9726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNGWOO PARK: "Explainable Anomaly Detection for District Heating Based on Shapley Additive Explanations", 2020 INTERNATIONAL CONFERENCE ON DATA MINING WORKSHOPS (ICDMW), 20 November 2020 (2020-11-20), pages 762-765, XP093164340, DOI: 10.1109/ICDMW51313.2020.00111 ISBN: 978-1-7281-9012-9 [retrieved on 2024-05-17] * page 1 - page 4 * ----- | 1-9 | INV. G06N5/045 G06N20/00 |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 21 May 2024 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)